(19) Europäisches Patentamt
European Patent Office
Office européen des brevets

(11) **EP 2 699 462 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **12715011.8**

(22) Anmeldetag: **03.04.2012**

(51) Int Cl.:
***B60W 30/02*** *(2012.01)*

(86) Internationale Anmeldenummer:
**PCT/EP2012/056056**

(87) Internationale Veröffentlichungsnummer:
**WO 2012/143238 (26.10.2012 Gazette 2012/43)**

(54) **FAHRDYNAMIKREGELUNG MIT GNSS UND INS**

DYNAMIC STABILITY CONTROL USING GNSS AND INS

COMMANDE DE LA DYNAMIQUE DE MOUVEMENT D'UN VÉHICULE COMPRENANT LES SYSTÈMES GNSS ET INS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2011 DE 102011018172**

(43) Veröffentlichungstag der Anmeldung:
**26.02.2014 Patentblatt 2014/09**

(73) Patentinhaber:
• **Meissner, Ute Marita**
**50996 Köln (DE)**
• **Meissner, Rolf**
**50996 Köln (DE)**

(72) Erfinder:
• **Meissner, Ute Marita**
**50996 Köln (DE)**
• **Meissner, Rolf**
**50996 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**DE-A1-102006 042 961      US-A1- 2009 171 585**
**US-A1- 2011 022 267**

• **Santiago Alban: "DESIGN AND PERFORMANCE OF A ROBUSTGPS/INS ATTITUDE SYSTEM FOR AUTOMOBILEAPPLICATIONS", , 1. Januar 2004 (2004-01-01), XP002679557, Gefunden im Internet: URL:http://waas.stanford.edu/~wwu/papers/g ps/PDF/Thesis/SantiagoAlbanThesis04.pdf [gefunden am 2012-07-10]**

**Beschreibung**

Die Erfindung betrifft ein Verfahren zur Regelung der Fahrdynamik eines Fahrzeuges, bei dem es sich insbesondere um ein Einspur- oder Zweispur-Landfahrzeug handelt.

Beschreibung des Standes der Technik

Die erste Fahrdynamikregelung wurde ca. 1995 als Elektronisches Stabilitätsprogramm (ESP) kommerziell genutzt. In den Folgejahren etablierte sich die Fahrdynamik-Regelung als sinnvolle Ausrüstung zu Erhöhung der aktiven Fahrsicherheit sehr schnell. Einige Fahrzeughersteller benutzen auch die Bezeichnungen DSC (Dynamic Stability Control), VSA (Vehicle Stability Assist) oder VSC (Vehicle Stability Control), Electronic Stability Control (ESC) u.a.

Fahrdynamikregelung bedeutet Anpassung des Fahrverhaltens des Fahrzeugs an den Fahrerwunsch im fahrdynamischen Grenzbereich. Dazu wird zunächst bestimmt, wie sich das Fahrzeug entsprechend dem Fahrerwunsch verhalten soll (Sollverhalten). Gemessen werden dazu der Lenkradwinkel, die Gaspedalstellung und der Bremsvordruck. Das tatsächliche Verhalten des Fahrzeugs (Istverhalten) wird über die drei Freiheitsgrade des Fahrzeugs in der Ebene (Längs-, Quer- und Giergeschwindigkeit um die Hochachse) gemessen. Das Regelsystem versucht, die Regelabweichung von Sollverhalten und Istverhalten gering zu halten. Dazu beeinflusst es die Reifenkräfte in geeigneter Weise durch Bremseneingriff und Motoreingriff. Neuere Systeme verwenden auch den Lenkungseingriff.

Fahrdynamikregelungen funktionieren nur, solange das Fahrzeug ausreichend Bodenkontakt hat. Die Fahrgeschwindigkeit wird klassisch über die Drehung und den Schlupf der Räder ermittelt. Bei fehlendem Bodenkontakt oder sehr rutschigem Untergrund (Eis) kann das System die momentane Fahrgeschwindigkeit nicht mehr ermitteln. Heben zwei, drei oder vier Räder vom Boden ab, so fehlt der Regelung der Messwert Fahrgeschwindigkeit.

Einige Fahrdynamikregelungen sind als Schwimmwinkel- und Giergeschwindigkeitsregelung ausgeführt. Große Schwimmwinkel führen zu großen Fehlern einiger Messwerte.

Fahrgeschwindigkeit und Querbeschleunigung werden von klassischen Fahrdynamik-Regelungen mit Bezug zur Fahrzeuglängsachse ermittelt. Bei großen Schwimmwinkeln entspricht weder die Richtung des Vektors der Fahrgeschwindigkeit auch nur annähernd der Längsachse, noch die Richtung des Vektors der Querbeschleunigung der Querachse des Fahrzeugs. Beschleunigungen längs der Hochachse werden klassisch üblicherweise gar nicht berücksichtigt.

In fahrdynamisch kritischen Fahrsituationen mit beispielsweise großem Schwimmwinkel und/oder Verlust des Bodenkontaktes können Bewegungen des Fahrzeuges von den klassischen Regelungen nicht mehr gemessen werden (z.B. Fahrgeschwindigkeit, Querbeschleunigung), weil dem System die Erfassung seiner Bewegungen und damit die Orientierung (Ausrichtung im Bezugssystem) verloren gegangen ist.

Ein Argument für die klassischen Fahrdynamik-Regelsysteme ist, dass die Systeme mit dem Verlust der Messgrößen auch die Stellmöglichkeiten verlieren und deshalb der Verlust der Messgrößen dann keine nachteiligen Auswirkungen mehr hat. Heben die Räder ab, dann kann auch kein Rad mehr bremsen. Dem Argument ist entgegenzuhalten, dass nach kurzzeitigem Abheben verbunden mit Dreh-, Kipp-, Nick- oder Wankbewegungen oder einem Anstoß von außen das Fahrzeug nach Wiedererlangung des Bodenkontakts sofort wieder fahrdynamisch kontrollierbar wäre, wenn das Regelsystem inzwischen nicht die Orientierung verloren hätte.

Ein neues Argument dafür, dass Fahrdynamik-Regelsysteme die Orientierung in keiner Fahrsituation verlieren dürfen, liefert die Entwicklung auf dem Gebiet der Vernetzung von Fahrzeugen car-to-car oder car-to-X. Die Fahrzeuge sollten jederzeit ihre aktuelle Position, Lage und Bewegungsrichtung kommunizieren können, und zwar möglichst in einem Erdkoordinatensystem.

Den meisten bekannten Fahrdynamik Regelsystemen ist gemeinsam, dass sie das Verhalten des Fahrzeugs lediglich über die drei Freiheitsgrade des Fahrzeugs in der Ebene (Längs-, Quer- und Giergeschwindigkeit/-beschleunigung um die Hochachse) messen können. Die Beschleunigungssensoren sind dazu fest mit dem Fahrzeug verbunden. Die Fahrstabilität wird also erfasst durch Messungen in einer Ebene, also zweidimensional. Die Messebene entspricht bei ausreichender Fahrstabilität des Fahrzeugs der Fahrbahnebene, die für die Kraftübertragung der Räder auf die Straße die relevante Ebene ist.

Ein allen diesen Systemen gemeinsamer Nachteil ist der, dass die Messebene bei starker Neigung des Fahrzeugs gerade im Grenzbereich eben nicht mehr der Fahrbahnebene entspricht, auf die die Kraftübertragung der Räder erfolgt.

Je stärker das Fahrzeug geneigt ist, desto größer sind die Messfehler. In besonders kritischen Fahrsituationen, in denen das Fahrzeug bereits stark geneigt ist, hoffen die Fahrer also auf das Eingreifen aktiver Sicherheitssysteme, die ihre reguläre Funktion dann bereits eingestellt haben.

Es gibt eine Reihe solcher Gefahrensituationen, in denen wegen des Neigungswinkels des Fahrzeugs die herkömmliche Beschleunigungsmessung nicht ausreicht.

Jeder Pkw oder Klein-Lkw ist in einer solchen Gefahrensituation, wenn bereits zwei der vier Räder deutlich abgehoben haben und das Fahrzeug zu kippen oder zu überschlagen droht.

Hier weicht die Messebene von der Fahrbahnebene deutlich ab. Die herkömmliche Beschleunigungsmessung ist hier unbrauchbar.

Ein weiteres Beispiel ist ein Motorrad in Kurvenlage. Die Messebene weicht ständig ganz extrem von der Fahrbahnebene ab. Das herkömmliche Messprinzip der Fahrdynamikregelung wie ESP ist unbrauchbar für ein Motorrad, weshalb solche Systeme in der Praxis auch nicht realisiert wurden.

Das Beispiel Motorrad zeigt aber einen weiteren großen Nachteil der herkömmlichen Fahrdynamikregelungen auf. Die Schräglage eines Motorrades wird einerseits von der Zentrifugalkraft und andererseits von der Schwerkraft und speziell von deren Richtung bestimmt. Herkömmliche Fahrdynamik-Regelsysteme sind aber nicht in der Lage, die Richtung der Schwerkraft zu messen.

Nicht nur beim Motorrad, sondern auch bei Zweispur-Fahrzeugen hat die Schwerkraft besonderen Einfluss auf die Fahrstabilität. Grenzbereiche zum Schleudern, Kippen, Überschlagen und auch Wegrutschen am Hang sind messtechnisch nur erfassbar, wenn die Richtung der Schwerkraft mit erfasst wird.

Es gibt eine Reihe von Beispielen, die aufzeigen, wie entscheidend die Messung der Richtung der Schwerkraft für die Erfassung der Fahrstabilität im Grenzbereich ist und welche Nachteile die herkömmlichen Systeme haben.

Ein Beispiel ist ein Geländewagen, der einen steilen Hang hinauffährt und nun unterwegs eine Kurve einschlägt, um den Hang daraufhin wieder herunter zu fahren. Herkömmliche Fahrstabilitäts-Regelungssysteme können nicht erkennen, dass das Fahrzeug, welches gerade quer zum Hang steht, gleich umkippen wird. Nur über die Erkennung der Richtung der Schwerkraft ist die Labilität der Fahrsituation messbar. Die Richtung, in der die Schwerkraft an dem Fahrzeug angreift, lässt sich aber mit der Sensorik eines herkömmlichen Fahrdynamikregelsystems nicht ermitteln.

Ein zweites Beispiel ist ein zweispuriges Fahrzeug in einer Steilwandkurve. Die Messebene der Beschleunigungssensoren entspricht hier zwar der Fahrbahnebene, aber hier wird die Fahrdynamik wesentlich durch die Neigung der Fahrbahn beeinflusst. Herkömmliche Fahrdynamik-Regelsysteme haben in Steilwandkurven Probleme, die Fahrstabilität korrekt zu erfassen, weil die Querbeschleunigungs-Messung durch die Schwerkraft verfälscht/überlagert wird. Es gibt weder einen verlässlichen Messwert für die Querbeschleunigung, noch für die Neigung des Fahrzeugs, wenn die Richtung der Schwerkraft nicht bekannt ist.

Zu einzelnen Druckschriften

Der gemeinsame Ansatz der im Folgenden genannten Druckschriften ist der, die Fahrdynamik eines Fahrzeugs über Brems- Motor- und Lenkungseingriffe zu regeln. Wesentliche Unterschiede bestehen in der Erfassung oder Messung der Bewegung bzw. Bewegungsänderung des Fahrzeugs, um kritische Fahrzustände zu erkennen, die einen Eingriff in die Fahrdynamik erforderlich machen.

Einige Druckschriften beschreiben Fahrdynamikregelungen mit Bildsensorsystemen wie z.B. DE-A-10 2004 022 289 und DE-A-10 2005 028 995. Die Bildsensoren erfassen die Bewegung des Fahrzeugs relativ zu seiner Umgebung (Straße, Häuser, Bäume u.a.). Diese Systeme haben aber den grundsätzlichen Nachteil, dass mit Bildsensoren zwar Bewegungen des Fahrzeugs erkannt werden können, nicht aber die Wirkrichtung der Schwerkraft.

Eine weitere Gruppe von Druckschriften beschreibt Fahrdynamikregelungen mit bis zu drei translatorischen und drei rotatorischen Beschleunigungssensoren, die die Bewegung des Fahrzeugs über Bewegungsänderungen erfassen (siehe DE-A-10 2009 000 922, DE-A-102 32 362 und DE-A-102 20 575. Diese Systeme können die Wirkrichtung der Gewichtskraft nur im Stand erfassen. Da diese Systeme die Fahrzeug-Bewegungen durch Integration von gemessenen Beschleunigungen ermitteln, unterliegen die so ermittelten Werte der Drift. Die räumliche Lage des Fahrzeugs in Erdkoordinaten und die Wirkrichtung der Schwerkraft während der Fahrt ist so nicht erfassbar.

US-A-2008/0147280 beschreibt ein Insassen-Schutzsystem. In dieser Schrift ist als eine mögliche Lösung ein System mit einer Kombination von IMU (Inertial Measurement Unit) mit GPS gekoppelt über Kalman Filter beschrieben. Das in Fig. 35 der genannten Schrift dargestellte System verfügt über einen GPS-Empfänger zur Positionserfassung. Drei Antennen zur Erfassung der Lage sind nicht vorgesehen. In [0410] dieser Schrift ist über deren Fig. 35 zu lesen, dass die IMU die Position des Fahrzeugs ermittelt und der GPS Empfänger diese Positionsdaten periodisch kalibriert. Von GNS-Lageerfassung ist hier nicht die Rede.

Das in US-A-2008/0147280 beschriebene Funktionsprinzip, das ohne GNSS-Lageerfassung auskommt, macht auch Sinn für den dort beschriebenen Anwendungsfall, denn das System ist ein Insassenschutzsystem, das dann reagieren soll, wenn Rutschen, Driften, Drehen oder drohender Überschlag festgestellt wurde. Bei einem bereiften Landfahrzeug entspricht seine Ausrichtung ("heading") solange seiner Bewegungsrichtung, abgeleitet aus zwei Positionssignalen, bis eines der genannten Ereignisse wie Rutschen, Driften, Drehen, Überschlag eintritt.

DE-C-101 48 667 beschreibt ein Verfahren zur Bestimmung einer vektoriellen Fahrzeuggeschwindigkeit. Das System nutzt sowohl die Messung des Geschwindigkeitsvektors mit drei translatorischen und drei rotatorischen Beschleunigungssensoren und Integration als auch einen oder mehrere GPS Empfänger mit zusammen zwei oder drei Antennen. Der Geschwindigkeitsvektor soll u.a. auch zur Fahrdynamikregelung verwendet werden. Das System dient aber ausschließlich der Erfassung des Fahrgeschwindigkeitsvektors bzw. des Schwimmwinkels. Es zeigt keinen Weg zur Ermittlung der Richtung der Schwerkraft auf.

Anders als die zuvor genannten Schriften beschreibt WO-A-2005/119290 ein System zur Lenkregelung eines Fahrzeugs. Das System soll dazu dienen, einen Traktor über ein Feld zu führen und dabei sehr genau den vorgegebenen Weg z.B. zum Pflügen des Ackers einzuhalten. Der Gegenstand dieser Schrift umfasst einen GPS Empfänger mit zwei oder mehr Antennen, der die Position und die Lage des Fahrzeugs erfassen kann. Die Positions- und die Lageinformation dient hier jedoch dazu, das Fahrzeug so zu lenken, dass die Abweichung von Soll- und Istverlauf der bearbeiteten parallelen Schneisen minimal ist. Hier wird also nicht die Fahrdynamik, sondern der Fahrweg geregelt. Der Lenkungseingriff dient nicht dazu, das Fahrzeug fahrdynamisch zu stabilisieren, sondern es auf dem Sollweg zu führen.

Aus Santiago Alban: "DESIGN AND PERFORMANCE OF A ROBUST GPS/INS ATTITUDE SYSTEM FOR AUTOMOBILE APPLICATIONS", Dissertation Universität Stanford, 2004, ist ein Verfahren zur Regelung der Fahrdynamik eines Fahrzeuges nach dem Oberbegriff des Anspruchs 1 bekannt.

Eine Aufgabe der Erfindung ist es, die klassischen Fahrdynamikregelsysteme zu verbessern und wirkungsvoller zu gestalten.

Zur Lösung dieser Aufgabe wird mit der Erfindung ein Verfahren zur Regelung der Fahrdynamik eines Fahrzeuges, insbesondere eines Einspur- oder Zweispur-Landfahrzeuges, vorgeschlagen, wobei das Verfahren die Merkmale des Anspruchs 1 aufweist. In den Unteransprüchen sind einzelne Ausgestaltungen der Erfindung angegeben.

Mit der Erfindung wird also vorgeschlagen, die Orientierung des Fahrzeuges im Raum in die Fahrdynamikregelung mit einzubeziehen. Dadurch kann insbesondere ermittelt werden, in welcher Richtung die Schwerkraft auf das Fahrzeug wirkt. Darüber hinaus lassen sich Daten über die Ausrichtung/Orientierung des Fahrzeuges im Raum auch dann noch ermitteln, wenn in einer Grenzsituation das Fahrzeug keinen Kontakt mehr zum Untergrund hat. Driften, Drehen und Rutschen sind keine Ereignisse mehr, bei denen die Fahrdynamikregelung die Orientierung verliert, sondern Fahrzustände, die die Fahrdynamikregelung weitgehend beherrschen und in sicherere Fahrzustände überführen soll. Schließlich kann die Fahrdynamikregelung auch bei Geländefahrten sowie Fahrten in Steilwandkurven zuverlässiger gestaltet werden.

Mit GNSS und INS lassen sich alle Bewegungen des Fahrzeuges und vor allem aber dessen Orientierung (Lage, Ausrichtung) dreidimensional und in absoluten Erdkoordinaten erfassen. Sowohl der Kurswinkel als auch der Gierwinkel und damit auch der Schwimmwinkel werden in Erdkoordinaten erfasst. Ebenso die Geschwindigkeit des Fahrzeugs nach Betrag und Richtung. Folgende teilweise modellbasierte Parameter eines klassischen Fahrdynamikregelsystems können mit GNS- und INS-basierten Messungen durch absolute, permanente Messungen in Erdkoordinaten ersetzt werden:

Längs- und Quergeschwindigkeit, Längs- und Querbeschleunigung, Gierwinkel, Giergeschwindigkeit, Schwimmwinkel, Schräglaufwinkel hinten und vorne (über Lenkradwinkel).

Das bedeutet: Alle Bewegungen und Bewegungsänderungen des Fahrzeugs sind in drei Dimensionen messbar. Nur die Kräfte an den Rädern und Momente am Fahrzeug sind nicht messbar. Diese werden aber auch beim klassischen Fahrdynamikregelsystem über das Fahrzeugmodell und linearisierte oder Kennlinien-basierte Radmodelle ermittelt.

Darüber hinaus ist die Wirkrichtung der Schwerkraft auf das Fahrzeug im Erdkoordinatensystem kontinuierlich messbar bzw. über dessen Position und Lage berechenbar. Der Vektor der Erdanziehungskraft, die auf das Fahrzeug wirkt, zeigt vom Schwerpunkt des Fahrzeugs zum Schwerpunkt der Erde. Als Schwerpunkt der Erde kann vereinfachend der Erdmittelpunkt oder das Zentrum des erdfesten Koordinatensystems mit den Koordinaten M = (0,0,0) angenommen werden. Aus der Richtung dieses Vektors und der Lage des Fahrzeugs in Erdkoordinaten "world frame" können bereits die relativen Winkel zwischen Wirkrichtung der Schwerkraft und Fahrzeugchassis berechnet werden. Zur Nutzung der Information der auf das Fahrzeug wirkenden Schwerkraft als Vektor in einem mathematischen Fahrzeugmodell kann eine Koordinatentransformation dieses Vektors von Erdkoordinaten in Fahrzeugkoordinaten "body frame" erfolgen. Damit erhält man die Wirkrichtung der Schwerkraft bezogen auf das Fahrzeug. Beide Koordinatensysteme mit entsprechenden Bezeichnungen sind für Luftfahrzeuge in der DIN 9300-1 beschrieben. Als Referenz wird üblicherweise für ein Flugzeug/ Fahrzeug ein fahrzeugfestes Bezugsachsensystem festgelegt, dessen x-Achse parallel zur Rumpflängsachse liegt. Das Aufstellen von Bewegungsgleichungen wird vereinfacht, wenn das Koordinatensystem auf den Schwerpunkt des Flugzeugs/Fahrzeugs bezogen wird.

Realisierung beispielhaft:

- Erfassung der Position und Lage des Fahrzeugs
- Erfassung der Fahrzeug-Bewegung (Geschwindigkeit als Vektor)
- Berechnung der Wirkrichtung der Schwerkraft
- Koordinatentransformation beider Vektoren in Fahrzeugkoordinaten
- Erfassung von Betrag und Richtung der Fahrzeug-Querbeschleunigung und aller anderen translatorischen und rotatorischen Beschleunigungen

- Berechnung der Kräfte und Momente an Fahrzeug und Rädern über mathematisches Fahrzeugmodell

Das Sollwertverhalten des Fahrzeugs kann wie beim klassischen Fahrdynamikregelsystem über das Einspur-Fahrzeugmodell aus Lenkwinkel, Fahrgeschwindigkeit und Gaspedal-/Bremspedalwerten ermittelt werden.

Geregelt werden können wie beim klassischen Fahrdynamikregelsystem Schwimmwinkel und Giergeschwindigkeit.

Die Soll-Ist-Abweichung der Giergeschwindigkeit kann über ein Gier-Stellmoment mit den Radbremsen wie beim klassischen Fahrdynamikregelsystem gestellt/korrigiert werden. Weitere Stellglieder sind Lenkung, Motor und elektronisch verstellbare Drehmoment-Verteilergetriebe im Antriebsstrang, Kippwinkelverstellung über Fahrwerkssteller, elektronisch verstellbare Spoiler oder Klappen.

Für Fahrten auf unbefestigten Straßen und im Gelände kann ein maximaler Soll-Schwimmwinkel als Fahrerwunsch aus der Gaspedalstellung abgeleitet werden. Großer Gaspedalausschlag führt beispielsweise zu großen tolerierten Schwimmwinkeln (Driften).

Die erfindungsgemäße Fahrdynamikregelung erfasst Fahrbahnneigung, sowie Steigung und Gefälle und berücksichtigt diese Winkel bei der Fahrdynamikregelung z.B. auf Basis eines um diese Winkel oder einfach nur um die Wirkrichtung der Schwerkraft erweiterten Fahrzeugmodells.

Vorteile:

Die erfindungsgemäße Fahrdynamikregelung erfasst Lage und Geschwindigkeitsvektor auch wenn das Fahrzeug den Bodenkontakt verliert.

Die erfindungsgemäße Fahrdynamikregelung funktioniert auch bei großen Schwimmwinkeln.

In kritischen Fahrsituationen wie Rutschen, Drehen, Kippen, Schleudern, Anstoß von außen wird die erfindungsgemäße Fahrdynamikregelung kontinuierlich fortgesetzt, weil die Messwerte der Fahrzeugbewegung unverfälscht und ununterbrochen erfasst wurden.

In vorteilhafter Weiterbildung der Erfindung lässt sich das Inertialmesssystem mittels des Satellitennavigationssystems kalibrieren, so dass das Inertialmesssystem (INS) Messdaten über Position und Lage des Fahrzeuges mit einer deutlich höheren Rate als das Satellitennavigationssystem liefert. Mit Hilfe der Messdaten des Satellitennavigationssystems lässt sich also das Ergebnis der Bewegungs-, Positions- und Lagebestimmung anhand des Inertialmesssystems stets aktualisieren. Das Inertialmesssystem arbeitet auf Basis von Beschleunigungssensoren, ermittelt also stets die Veränderungen der Bewegung und daraus die Position und Lage des Fahrzeuges durch Integration, was im Laufe der Zeit immer ungenauer erfolgt, da eine Drift entsteht. Durch den laufend, d.h. in kurzen Zeitintervallen stets erfolgenden Abgleich der Daten über die Bewegung, Position und Lage des Fahrzeuges gemäß Inertialmesssystem durch die entsprechenden Daten des Satellitennavigationssystems lässt sich die Orientierung des Fahrzeugs, seine Position und Lage stets genau ermitteln.

In weiterer vorteilhafter Ausgestaltung der Erfindung kann vorgesehen sein, dass die Messdaten des Satellitennavigationssystems (GNSS) und des Inertialmesssystems (INS) über ein Kalman-Filter gekoppelt werden, wobei in denjenigen Zeiträumen, in denen das Satellitennavigationssystem keine oder keine auswertbaren Daten liefert, die Ermittlung der Bewegungs-, Positionsund/oder Lageänderungen des Fahrzeuges fortgesetzt wird, wobei insbesondere vorgesehen sein kann, dass am Ausgang des Kalman-Filters Daten mit einer Wiederholrate von größer 10 Hz zur Verfügung stehen.

Das Inertialmesssystem (INS) sollte fest mit dem Fahrzeug verbunden sein und misst sämtliche drei senkrecht aufeinander stehenden translatorischen Beschleunigungen sowie sämtliche drei senkrecht aufeinander stehenden rotatorischen Beschleunigungen.

Neben der bereits oben angesprochenen Einwirkung auf die Fahrdynamik des Fahrzeuges durch Bremseingriff (Verzögerung des Fahrzeuges gegebenenfalls und insbesondere gezielt für einzelne Räder) und Motoreingriff (kurzzeitiges Beschleunigen) kann die Fahrdynamik des Fahrzeuges zusätzlich auch durch Lenkeingriff geregelt werden.

Der Motoreingriff kann durch elektronisch verstellbare Drehmomentverteiler (Sperren, Bremsen, Getriebe) im Antriebsstrang erweitert werden.

Die Fahrdynamik, speziell die Kippneigung kann durch elektronisch verstellbare Fahrwerkssteller positiv beeinflusst werden.

Ist bei höheren Geschwindigkeiten die Bodenhaftung der Räder kurzzeitig unterbrochen, so kann durch elektronisch verstellbare Spoiler oder Klappen die Wiederherstellung eines sicheren Fahrzustandes unterstützt werden.

In weiterer vorteilhafter Ausgestaltung der Erfindung kann vorgesehen sein, dass Positions-, Bewegungsund/oder Lagedaten und/oder Daten über die Veränderung der Position, Bewegung und/oder Lage von benachbarten anderen Fahrzeugen und/oder dass Daten über den Zustand des Untergrundes insbesondere hinsichtlich seiner Haftreibungseigenschaften für die Fahrdynamikregelung verwendet werden und/oder dass die Positions-, Bewegungs- und/oder Lagedaten oder Daten über die Veränderung der Position, Bewegung und/oder Lage des Fahrzeuges an benachbarte andere Fahrzeuge gemeldet werden (Unfallvermeidung beispielsweise durch Glättemeldung, hochdynamische Kollisionsvermeidung).

Schließlich ist es auch möglich, dass die Positions-, Bewegungs- und/oder Lagedaten oder Daten über die Veränderung der Position, Bewegung und/oder Lage des Fahrzeuges an Fahrerassistenzsysteme zur z.B. Abstandsmessung, Kollisionsvermeidung und/oder zum aktiven Schutz der Insassen vor Verletzungen bei einem Unfall wie z.B. Airbag und/oder Gurtstraffer, ausfahrbare Überrollbügel weitergegeben werden. Selbstverständlich können die Positions-, Bewegungs- und/oder Lagedaten oder Daten über die Veränderung der Position, Bewegung und/oder Lage des Fahrzeuges auch zur Navigation des Fahrzeuges verwendet werden.

Wie bereits oben erwähnt, bietet die erfindungsgemäße Fahrdynamikregelung durch Erkennung der Wirkrichtung der Schwerkraft und Auswertung der Lage des Fahrzeuges im Erdkoordinatensystem zusammen mit der Auswertung von Beschleunigungen im Raum Schutz vor einem Kippen und/oder Überschlagen. Durch die erfindungsgemäße Fahrdynamikregelung kann darüber hinaus infolge der Erkennung der Wirkrichtung der Schwerkraft und der Auswertung der Lage des Fahrzeuges im Erdkoordinatensystem eine Fahrt auf einer geneigten (überhöhten) Fahrbahn (Steilwandkurve) oder im Gelände erkannt und die Fahrdynamik entsprechend geregelt werden.

Ein weiterer Vorteil der Erfindung besteht in ihrer Anwendung bei Einspur-Fahrzeugen, bei denen nunmehr die Fahrdynamikregelung durch Ermittlung der Schräglage, der Fahrgeschwindigkeit, der Querbeschleunigung und des Gierwinkels mit Bezug auf das Erdkoordinatensystem die Fahrstabilität über Bremseingriff und/oder Lenkeingriff sowie Motoreingriff aufrechterhalten bzw. wieder hergestellt werden kann.

Die Erfindung wird nachfolgend in Gegenüberstellung zu bekannten Systemen zur Fahrdynamikregelung von Zweispur- und Einspur-Fahrzeugen unter Verweis auf die Zeichnung beschrieben. Im Einzelnen zeigen dabei:

Fig. 1          schematisch die Anordnung dreier Beschleunigungs- bzw. Gierratensensoren zur Ermittlung der Lage bzw. Orientierung eines Gegenstandes in einem Bezugssystem (beispielsweise im Raum),

Fig. 2          die Darstellung eines einspurigen Zweirad-Fahrzeuges, beispielsweise Motorrads, in Schräglage zur Verdeutlichung der angreifenden Kräfte,

Fign. 3 bis 5     ein zweispuriges Fahrzeug in verschiedenen Orientierungen zur Verdeutlichung der jeweils angreifenden Kräfte,

Fig. 6          eine Übersicht über die Hauptkomponenten eines kombinierten GNSS- und INS-Messsystems und

Fig. 7          in Draufsicht ein einspuriges Fahrzeug mit Hinterradlenkung (angedeutet).

Um bei der Beschleunigungsmessung den Nachteil der möglichen Abweichung von Messebene und für die Fahrdynamik relevanter Ebenen wie Fahrbahnebene oder Erdoberfläche auszugleichen, ist es sinnvoll, jede Bewegung des Fahrzeugs im dreidimensionalen Raum zu erfassen. Dazu wird das Fahrzeug mit drei translatorischen und drei rotatorischen Beschleunigungs-Sensoren ausgestattet. Alle Bewegungen des Fahrzeugs sind so als Vektor mit Betrag und Richtung messbar. Verschiebt sich die Messebene im Fahrzeug gegenüber der fahrdynamisch relevanten Ebene z.B. durch Neigung des Fahrzeugs, so können alle Bewegungen auf der relevanten Ebene genau erfasst werden, wenn die Lage der relevanten Ebene vom System eindeutig erkennbar ist. Das setzt voraus, dass sich das System zur Regelung der Fahrstabilität orientieren kann.

Der Begriff "Orientierung" bedeutet Ausrichtung in einem Bezugssystem). Dazu gehören die Kenntnis der eigenen Position und der Lage, sowie deren Änderungen. Dazu gehört auch die Kenntnis der eigenen Bewegungs-Geschwindigkeit und Bewegungsrichtung im Bezugssystem. Dazu gehört auch die Kenntnis der Wirkrichtung der Schwerkraft.

Die eigene Position (ohne Lagebestimmung) ist heute leicht über einen GNS-Navigationsempfänger messbar. Die Positionsdaten werden in Weltkoordinaten erfasst und liegen im System meist in WGS 84 Format vor. Die Messung der Lage bzw. Orientierung eines Fahrzeugs mit GNSS-Empfängern ist heute allgemein noch nicht üblich.

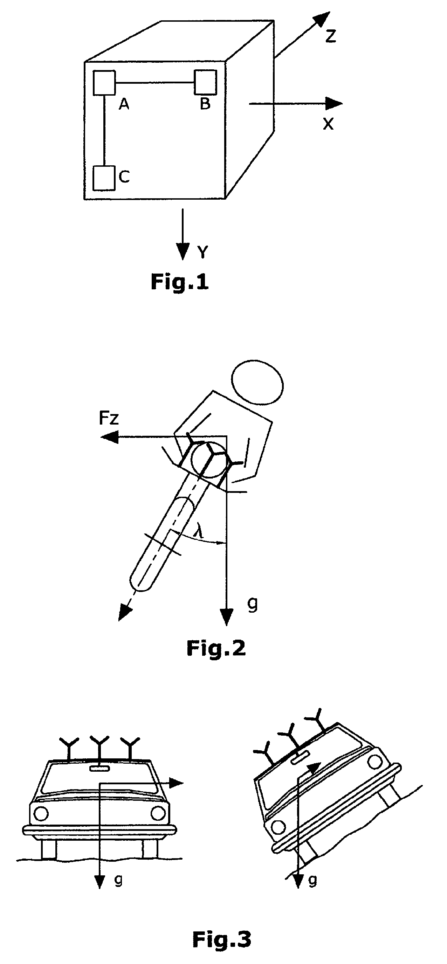

Zur Messung der Lage von Satelliten werden heute oft drei Empfangsantennen verwendet, die alle das Signal eines Senders empfangen. Aus der Signallaufzeit und Phasendifferenz lässt sich eindeutig und sehr genau der Einfallswinkel des Signals messen. Aus der bekannten Position von Sender und Empfänger ergibt sich so die Lage des Empfängers im Bezugssystem (Fig. 1).

Ist die eigene Position und Lage im Bezugssystem bekannt, so kann durch Einsatz von drei rotatorischen und drei translatorischen Beschleunigungs-Sensoren jede Bewegung, also Änderung von Position und Lage nach Betrag und Richtung erfasst werden (Inert Navigation System INS).

Für die Orientierung (Navigation) von Flugzeugen hat z.B. die Stanford University in praktischen Versuchen nachgewiesen, dass die Kombination aus einem GNS-Empfänger mit drei Antennen und einem System aus drei rotatorischen und drei translatorischen Beschleunigungssensoren einfacher Bauart aus dem Kfz-Bereich eine ideale Kombination zur Orientierung im Bezugssystem (Navigation) darstellen.

Das INS-System stellt sicher, dass die Daten von Position und Lage deutlich schneller als 50 mal in der Sekunde aktualisiert werden. Das GNSS-System liefert deutlich langsamer als INS verlässliche, sehr genaue Daten über Position und Lage.

Fällt das GNSS-System durch Abschattungen kurzzeitig aus, dann kann das INS-System für Minuten die Navigation und Lageerkennung ohne GNSS fortsetzen. Danach entstehen allerdings Fehler durch Drift des INS. Insofern ergänzen sich GNSS und INS in dieser Form ideal.

Einsatz im Fahrzeug

GNSS-Empfänger sind in Fahrzeugen üblich. Die Ausrüstung mit drei Antennen zur Winkel- und Orientierungs-(Lage-) Messung sollte technisch kein großer Aufwand sein. Die Beschleunigungssensoren sind in ESP-Systemen auch üblich, jedoch sollen im Unterschied zu ESP erfindungsgemäß sechs Sensoren, drei rotatorische, drei translatorische eingesetzt werden. Die Kombination von GNSS und INS geschieht z.B. über Kalman-Filter.

Bei Einsatz dieses erfindungsgemäßen Systems im Fahrzeug als Sensorik zur Fahrdynamikregelung gibt es einen großen Vorteil gegenüber dem Einsatz zur Navigation in Flugzeugen:

Im Fahrzeug kann dasselbe System sowohl der Orientierung in Echtzeit (Navigation) als auch der Messung von Fahrzeugbewegungen (Beschleunigungen) im Bezugssystem dienen. (Das Bezugssystem ist ein Weltkoordinatensystem wie WGS 84). Da die Lage des Fahrzeugs im Bezugssystem gemessen wird, ist auch die Richtung der Schwerkraft bezogen auf das Fahrzeugchassis ständig bekannt. Damit ist auch die Schräglage bzw. Neigung des Fahrzeugs nach rechts, links, vorne, hinten leicht berechenbar. Die Beschleunigungen werden nach Betrag und Richtung ebenfalls im Bezugssystem (Weltkoordinatensystem) gemessen.

Das erfindungsgemäße System eignet sich dadurch auch zur Regelung der Fahrdynamik in den bisher kritischen Fällen Motorrad, Fahrzeug im Gelände, Steilwandkurven.

Das System liefert weiterhin wertvolle Daten für andere Systeme:

- Position für Navigationssysteme
- Position, Lage und Geschwindigkeitsvektor zur Kommunikation und Unfallverhütung car-to-car oder car-to-X in Echtzeit
- Unfallvorhersage
- Informationen in Echtzeit für Sicherheitssysteme wie Gurtstraffer und Airbags

Geht man von einem Fahrzeug mit gehobener Ausstattung aus, dann spart dieses System mehr Hardware ein, als es zusätzliche Hardware verlangt.

Fahrdynamikregelung für Motorräder

Die Regelungsstrategien bekannter Fahrdynamik-Regelungen wie ESP verfolgen den Ansatz, den Fahrerwunsch möglichst genau einzuhalten, ohne das Fahrzeug dabei in einen instabilen Fahrzustand geraten zu lassen. Hierzu wird der Fahrerwunsch (Sollwert) über Sensoren ermittelt und mit dem Istwert des Fahrzustandes verglichen. Der Fahrerwunsch wird über Lenkradwinkel, Gaspedalstellung und Bremspedaldruck (Kraft) ermittelt, der Fahrzustand wird gemessen über translatorische und rotatorische Beschleunigungen, sowie Lenkbewegungen und rotatorische Bewegungen der Räder.

Ein Fahrdynamikregler vergleicht Sollwerte und Istwerte und stellt über Eingriffe bei Bremsen, Lenkung und Motor möglichst geringe Sollwertabweichungen bei möglichst hoher Fahrstabilität ein.

ESP und andere Systeme verwenden dazu unterlagerte Gierraten und Schwimmwinkelregelungen.

Diese Systeme funktionieren überwiegend mit Bezug auf die Fahrbahnebene, also zweidimensional.

Stand der Technik

ABS (Antiblockiersystem) und ASC (Antriebsschlupfregelung) für Motorräder sind bekannt.

Über Fahrdynamikregelungen wie ESP für Motorräder ist bisher nur wenig Information in der Literatur zu finden. In DE-A-102 32 362 ist ein System beschrieben, bei dem abhängig von der gemessenen Querbeschleunigung der Bremsdruck (vorne und/oder hinten) reduziert wird und bei dem über die Gierrate auch die Seitenführungskräfte der Räder erfasst werden. In der zuvor genannten Schrift wird auch auf die "störende Schräglage" des Motorrads bei einer Kurvenfahrt hingewiesen, "so dass einfache mechanische Einrichtungen für die Bestimmung der Querbeschleunigung nicht zur Verfügung stehen".

In DE-A-10 2004 022 289 ist eine Fahrdynamikregelung mit Bildsensorsystem beschrieben, die zur dreidimensionalen Erfassung und Modellierung der Fahrzeugbewegung ein Bildsensorsystem einsetzt. Das System erfasst sowohl Gierbewegungen als auch Nick- und Wankbewegungen und soll so auch die Schräglage des Motorrades relativ zur Fahrbahn erfassen können.

In DE-A-10 2005 028 995 A1 ist ebenfalls ein Verfahren zur Fahrdynamikregelung für motorisierte Einspurfahrzeuge beschrieben, das mit einer Kamera und einer Bildsequenz-Auswerte-Einrichtung in Fahrtrichtung Nickwinkel und Schräglage erkennt und über die Bremsfunktionen die Fahrstabilität aufrechterhält.

Die Systeme können aber Gravitationskräfte, also die Schwerkraft nicht erfassen.

Die Fahrdynamik eines Motorrades bei Kurvenfahrt (siehe Fig. 2) wird bestimmt von der Erdanziehung/Schwerkraft und der Zentrifugalkraft.

$$Fg = \tan \lambda * m * g$$

Fg: Kraft durch Erdanziehung, m: Fahrzeugmasse

$$Fz = m * \frac{m*v^2}{r}$$

Fz: Zentrifugalkraft λ: Neigungswinkel

Für die Schräglage des Motorrades bezogen auf die Erdanziehung/Schwerkraft ergibt sich unter Vernachlässigung der Kreiseleffekte und der Reifenbreite:

$$\lambda = \arctan\left(\frac{v^2}{g \cdot R}\right) = \arctan\left(\frac{\ddot{y}}{g}\right)$$

v: gefahrene Geschwindigkeit
*g*: Erdbeschleunigung
R: Radius der Kurvenbewegung
ÿ: Querbeschleunigung im erdfesten Koordinatensystem

Die Fahrbahnneigung wird hier nicht berücksichtigt, da hier nicht ausschlaggebend.

Die Formel zeigt, dass die Schräglage direkt proportional zur Querbeschleunigung im erdfesten Koordinatensystem ist. Aus der Schräglage lässt sich demnach eine Querbeschleunigung berechnen, die sich im fahrstabilen Zustand einstellen müsste.

Weicht die gemessene Querbeschleunigung davon ab, dann ist der Fahrzustand entsprechend instabil.

Für konstante Werte der Schräglage ergibt die Formel für jede vorgegebene Geschwindigkeit einen Kurvenradius.

Das Motorrad stellt als Einspur-Fahrzeug ein systembedingt labiles System um die Längsachse dar. Der Fahrer ist stets bemüht, das Motorrad mit der Lenkung zu stabilisieren.

Der Fahrtwunsch des Fahrers kann theoretisch wie beim vierrädrigen Fahrzeug durch Lenkwinkel, Winkel des Gasgriffs und Bremspedalkraft gemessen werden. Weil der Lenkwinkel aber bei unterschiedlichen Seitenneigungen der Fahrbahn bei gleicher Geschwindigkeit und Schräglage nicht konstant ist, macht es Sinn, als Fahrtwunsch des Fahrers nicht den Lenkwinkel, sondern den Kurvenradius zu wählen, der sich bei einer bestimmten Fahrgeschwindigkeit aus der vom Fahrer eingestellten Schräglage ergibt. Es wird also Fahrgeschwindigkeit und Schräglage gemessen, um den Fahrtwunsch Kurvenradius zu erfassen. Die Sollwerte der Fahrdynamikregelung sind damit erfasst.

Die Istwerte lassen sich einfach durch kontinuierliche Ermittlung der Position und Lage des Motorrads im Erdkoordinatensystem und durch Bewegungsänderungen erfassen. Eine Abweichung der Querbeschleunigung im Erdkoordinatensystem vom aus der Schräglage errechneten Wert weist auf Rutschen hin. Die Einhaltung des aus Schräglage und Fahrgeschwindigkeit errechneten Kurvenradius R kann über die Gierrate kontrolliert werden. Weicht die gemessene Gierrate davon ab oder ändert sie sich schnell, dann rutscht ein Rad. Ändert sich die Schräglage schnell, so ist mit Lowsider-Stürzen (Umkippen), oder sogar Highsider-Stürzen (Aufrichten) zu rechnen. Wird eine schnelle Nickbewegung erkannt, dann besteht die Gefahr des Überschlags. Der Schwimmwinkel kann gemäß DIN 70000 durch tan $\alpha$ = dvy/dvx berechnet werden. Der Schwimmwinkel gibt Auskunft über die momentanen Übertragungskräfte der Reifen.

Hochfrequente Anteile in den gemessenen Beschleunigungen lassen auf Pendeln oder Lenkerflattern schließen.

Bei Erkennung der vorgenannten Instabilitäten kann eine Fahrstabilitätsregelung wie folgt reagieren:

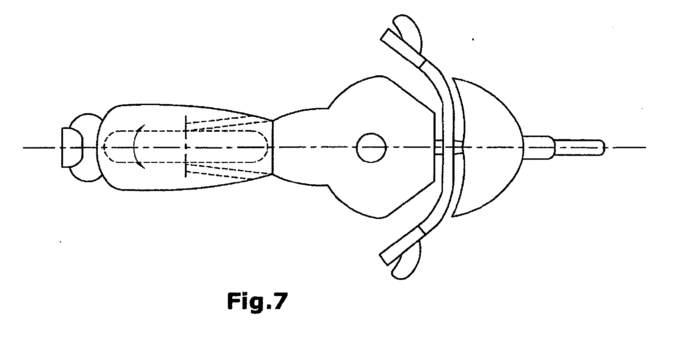

Lösen der Bremse bei Wegrutschen eines Rades. Lösen der Bremsen bei Gefahr von Lowsider- oder Highsider-Sturz. Eingriff in die Motorsteuerung z.B. zum gleichen Zweck. Lenken des Vorderrades zur Korrektur der Schräglage. Lenkung des Hinterrades um wenige Grade, um den Bodenkontakt zu verbessern oder wiederherzustellen und eine gefährliche Schräglage zu reduzieren (siehe die schematische Darstellung in der Draufsicht gemäß Fig. 7).

Die Regelung der Fahrdynamik des Motorrades, wie hier beschrieben nach der Erfindung, ist nur möglich, weil die Bewegungen des Motorrades mit allen translatorischen und rotatorischen Beschleunigungen im dreidimensionalen Raum in absoluten Erdkoordinaten erfasst werden. Die Schräglage wird mit Bezug zur Richtung der Schwerkraft gemessen.

Fahrdynamikregelung für Geländewagen

Besondere Gefahren bei Fahrt im Gelände sind dadurch gegeben, dass die Topographie des Geländes Neigungswinkel aufweist, die das Fahrzeug beim Befahren in gefährliche Schräglagen bringen können.

Das Fahrzeug droht umzukippen oder sich zu überschlagen. Das Umkippen oder Überschlagen aus sehr langsamen Geschwindigkeiten heraus wird in erster Linie bestimmt von der Lage des Fahrzeugs im Gelände und von seinem Schwerpunkt, also von der Schwerkraft. Zusätzlich zur Schwerkraft wirken fahrdynamische Beschleunigungen.

Stand der Technik

In DE-A-32 22 149 ist eine Vorrichtung zur Verhinderung des Seitwärtskippens eines Fahrzeugs, insbesondere eines Portalhubwagens beschrieben, der eine Ladung, insbesondere einen Container trägt. Die Vorrichtung erfasst das Gewicht und die Höhe des Schwerpunktes der Ladung, sowie Steuerwinkel und Geschwindigkeit des Fahrzeugs. Das System ermittelt eine statische Stabilität aus Schwerpunkt und Gewicht der Ladung und eine dynamische Stabilität während der Kurvenfahrt aus Steuerwinkel und Fahrgeschwindigkeit. Bei Vergleich der statischen und der dynamischen Stabilität und Unterschreiten eines Grenzwertes wird ein Steuersignal z.B. zum Bremsen abgegeben.

Neuer Ansatz:

Der Schwerpunkt eines unbeladenen Fahrzeugs ist vom Hersteller leicht ermittelbar. Das Vorhandensein eines Beifahrers wird heute zur Gurtanlege-Warnung messtechnisch erfasst. Das Vorhandensein des Fahrers wird hier als gegeben vorausgesetzt. Möglichkeiten der Erkennung/Messung weiterer Beladung sind bekannt, diese werden aber hier nicht weiter behandelt.

In Fig. 3 ist ein Fahrzeug im Gelände dargestellt (Linkskurve). Die am Fahrzeug (Schwerpunkt) angreifenden Kräfte sind eingezeichnet. Wenn die Lage des Fahrzeugs bekannt ist und seine Geometrie, dann lässt sich anhand der am Fahrzeug angreifenden Kräfte schnell feststellen, ob das Fahrzeug noch stabil fährt oder bald umkippt. Ein Grenzbereich lässt sich dabei einrechnen. Anhand des Bildes ist zu erkennen, dass diese Berechnung nur möglich ist, wenn die Richtung der Schwerkraft bekannt ist.

Fig. 3 zeigt ein Fahrzeug, das beim Bremsen am Hang zu überschlagen droht.

Es gibt einige Ansätze zur Erfassung von Kippen oder Neigen in Kombination mit klassischen Fahrdynamikregelsystemen. Ein Ansatz ist die Erfassung der Kräfte in den Federbeinen. Ein weiterer Ansatz ist die Messung und Begrenzung von Querbeschleunigung und/oder Giergeschwindigkeit (DE-A-10 2009 000 922). Wie nahe das Fahrzeug an der Grenze zum Kippen ist, lässt sich realistisch jedoch nur bestimmen, wenn die Richtung der Schwerkraft bekannt ist. Klassische Systeme können die Richtung der Gewichtskraft bisher nicht erfassen.

GNSS & INS

Mit dem auf die Kombination aus GNSS- und INS-Messdaten beruhenden erfindungsgemäßen Verfahren lässt sich die Lage des Fahrzeugs in Echtzeit erfassen. Die Messung geschieht in einem Erdkoordinatensystem (z.B. WGS84). Im Erdkoordinatensystem ist die auf das Fahrzeug wirkende Schwerkraft, vor allem aber ihre Richtung berechenbar, denn der Vektor der Schwerkraft zeigt auf den Erdmittelpunkt oder den Mittelpunkt des Erdkoordinatensystems M= (0,0,0) oder den Schwerpunkt der Erde. Aus der dreidimensionalen Beschleunigungsmessung, die alle Beschleunigungen nach Betrag und Richtung liefert, können alle Kräfte ermittelt werden, die am Fahrzeug angreifen. Das Fahrzeug stützt sich über die Reifen ab. Über die Geometrie des Fahrzeugs, Lage des Schwerpunkts, Lage aller vier Räder kann berechnet werden, ob die angreifenden Kräfte das Fahrzeug kippen oder am Kippen hindern (Kippmoment).

Droht das Fahrzeug zu kippen, dann kann die erfindungsgemäße Fahrdynamikregelung durch Bremseneingriff, Motoreingriff mit geregelter Drehmomentverteilung im Antriebsstrang, Lenkungseingriff oder Eingriff in das (hydrodynamische) Fahrwerk die noch vorhandene Fahrstabilität erhalten oder verbessern bzw. eine weitere Verschlechterung verhindern.

Die erfindungsgemäße Fahrdynamikregelung lässt sich mit herkömmlichen Regelungen kombinieren z.B. Schwimmwinkel und Gierratenregelung, diese dürfen aber nicht zweidimensional auf eine Fahrbahn bezogen sein, sondern dreidimensional bezogen auf das Erdkoordinatensystem.

Erkennung der Fahrbahnneigung, verbesserte Fahrdynamikregelung für Zweispurfahrzeuge

Ein weiterer wichtiger Parameter zur Erkennung der Fahrdynamik eines Fahrzeuges ist die Neigung der Fahrbahn. Klassische Systeme können die Neigung der Fahrbahn und die Steigung/Gefälle nicht erkennen. Weil die Erdanziehungskraft bei geneigter Fahrbahn einen Beitrag zur Querbeschleunigung liefert, wird der Messwert Querbeschleunigung bei klassischen Systemen prinzipbedingt verfälscht. Es gibt Ansätze, in klassischen Systemen durch Plausibilitätsabfragen die Neigung der Fahrbahn zu erkennen. Diese Verfahren sind allerdings nicht sehr genau, weil sie die Erdbeschleunigung wohl nach Betrag nicht aber nach der Richtung, in der sie auf das Fahrzeug wirkt, messen, sondern die Auswirkung der geänderten Richtung der Erdbeschleunigung.

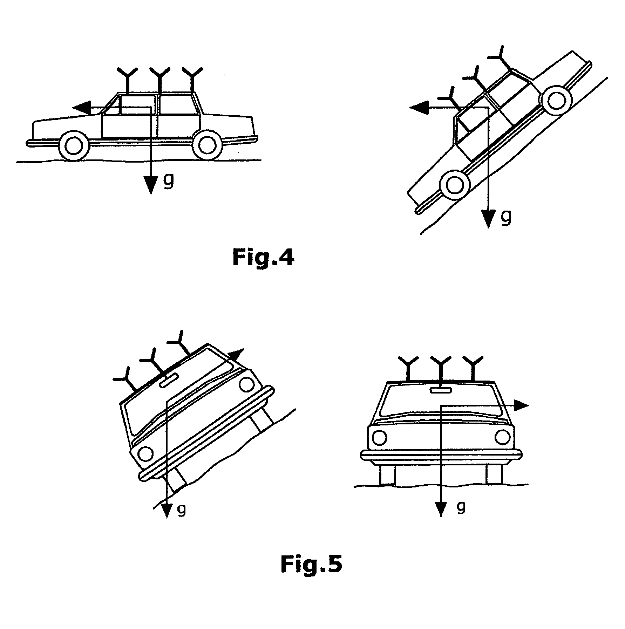

Übliche Fahrdynamikregelungen für Zweispurfahrzeuge wie ESP haben in stark geneigten (überhöhten) Kurven, also z.B. in Steilwandkurven das Problem, dass die Querbeschleunigung teilweise durch die Erdbeschleunigung (Schwerkraft g) kompensiert wird, was zu Fehlmessungen und infolgedessen zu Fehlverhalten der Fahrdynamik-Regelung führen kann. Bei einer nicht geneigten, senkrecht zur Schwerkraft verlaufenden Fahrbahn (regulär) steht die Richtung der Querbeschleunigung senkrecht auf der Richtung der Schwerkraft, so dass die Schwerkraft keinen Anteil an der Querbeschleunigung liefern kann. Bei Neigung der Fahrbahn (gegenüber einer senkrecht zur Schwerkraft verlaufenden Ebene) entsteht eine Überlagerung von Querbeschleunigung und Erdbeschleunigung (Fig. 5).

Um Fehlverhalten aufgrund von Fehlmessungen auf geneigten Fahrbahnen weitgehend auszuschließen, sind in derzeitigen Fahrdynamik-Regelsystemen deshalb relativ breite sog. Totzonen programmiert.

Ebenfalls zu diesem Zweck vorgesehene Plausibilitätsabfragen über die Giergeschwindigkeit haben einen zeitlichen Verzug, der die Regelung zu langsam reagieren lässt.

Stand der Technik:

In DE-A-102 20 575 wird ein Verfahren zur Erkennung einer Steilwandkurve beschrieben, das über Höhenstandssignale an allen vier Rädern die Nickbewegung des Fahrzeugaufs und daraus eine Steilwandkurve erkennt. Das System ist für Fahrdynamik-Regelsysteme gedacht.

Steilwandkurvenerkennung mit GNSS und INS

Mit dem erfindungsgemäß ein Sensorsystem aus GNSS und INS nutzenden Verfahren ist die Neigung der Fahrbahn bei Zweispurfahrzeugen leicht messbar. Dazu wird die Neigung des Fahrzeugs über die Winkelmessung des GNSS mit drei Antennen in Echtzeit gemessen. Die Fahrbahnneigung entspricht dann relativ genau der Neigung des zweispurigen Fahrzeugs, wenn mindestens drei der vier Räder Bodenkontakt haben. Der Bodenkontakt der Räder lässt sich über Antriebskräfte, Bremskräfte und Drehbewegungen der Räder feststellen. Eine geringe Abweichung von Fahrzeugneigung und Fahrbahnneigung auch bei Bodenhaftung entsteht durch unterschiedliche Federwege der Räder. Diese Abweichung ist aber unbedeutend für ein Fahrdynamik-Regelsystem. Durch Messen der Federwege der Federbeine kann zusätzlich diese Abweichung gemessen und die Fahrbahn-Neigungsmessung korrigiert werden.

Bessere "Orientierung" für Fahrdynamik-Regelungssysteme

Es wurde bereits darauf hingewiesen, dass ein zweispuriges Fahrzeug die "Orientierung" verliert, wenn zwei von vier Rädern bereits abgehoben haben. Bei dem erfindungsgemäßen Verfahren mit GNSS und INS und Messung von Position und Lage im Erdkoordinatensystem kann die Orientierung auch dann ermittelt werden, wenn das Fahrzeug sich z.B. bereits überschlagen hat. Die Möglichkeiten des Eingriffs sind dann zwar begrenzt, soweit das Fahrzeug nicht wieder auf den Rädern landet.

Darüber hinaus können diese Daten über verunfallte Fahrzeuge in zukünftigen car-to-car bzw. car-to-X Systemen (Kommunikation zwischen den Fahrzeugen und mit der Infrastruktur) helfen, Folgeunfällle (wie Massenkarambolagen) zu verhindern. Ein kreuzendes Fahrzeug kann durch car-to-car Kommunikation mittels Bremseneingriff oder Motoreingriff an dem Zusammenstoß mit dem bereits verunfallten aber noch in Bewegung befindlichen Fahrzeug gehindert werden.

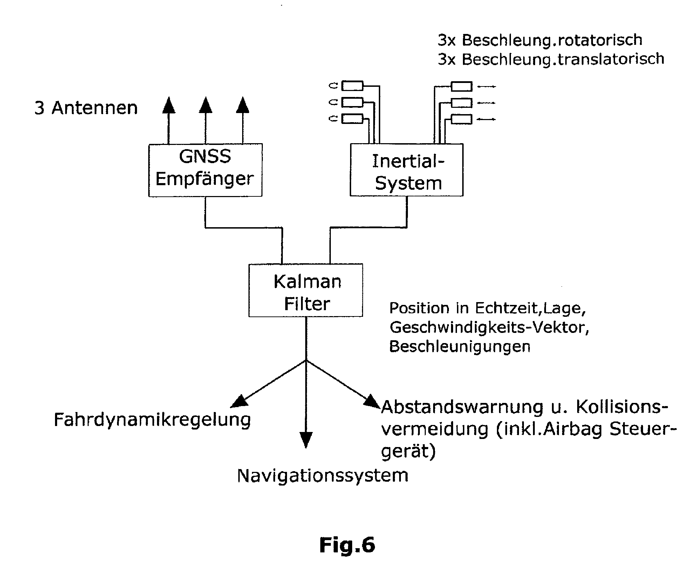

Fig. 6 zeigt das Gesamtmesssystem aus GNSS und INS für die Fahrdynamikregelung (und weitere zusätzliche Anwendungen).

**Patentansprüche**

1. Verfahren zur Regelung der Fahrdynamik-eines Einspur- oder Zweispur-Landfahrzeuges, bei dem

   - die Fahrdynamik des Fahrzeuges über Brems- und/oder Motoreingriff geregelt wird, und zwar in Abhängigkeit von der Bewegung des Fahrzeuges im dreidimensionalen Raum sowie bezogen auf ein Erdkoordinatensystem mit dem Erdschwerpunkt als Ursprung,
   - wobei die Lage und die Position des Fahrzeuges im dreidimensionalen Raum sowie auf das Erdkoordinatensystem bezogen mittels eines Satellitennavigationssystems (GNSS), das einen am oder im Fahrzeug angebrachten Empfänger mit mindestens drei Antennen zum Empfang von Satellitennavigationssignalen aufweist, und eines am oder im Fahrzeug angeordneten Inertialmesssystems (INS) zur Messung sämtlicher Bewegungs-, Positions- und Lageänderungen des Fahrzeuges ermittelt werden,

   **dadurch gekennzeichnet,**

   - **dass** die über Brems- und/oder Motoreingriff erfolgende Fahrdynamikregelung zusätzlich in Abhängigkeit von der Wirkrichtung der Schwerkraft oder Erdanziehungskraft erfolgt,
   - wobei aus den Werten von Position und Lage des Fahrzeugs und den Koordinaten des Erdschwerpunktes die Richtung der auf das Fahrzeug wirkenden Schwerkraft oder die Richtung des Vektors vom Fahrzeugschwerpunkt zum Erdschwerpunkt in erd- oder/und in fahrzeugfesten Koordinaten in Echtzeit errechnet wird.

2. Verfahren nach Anspruch 1, **dadurch gekennzeichnet, dass** das Inertialmesssystem (INS) mittels des Satellitennavigationssystems ständig mit den aktuellen Daten von Position und Lage kalibriert wird und Messdaten über Bewegungsänderungen, sowie über Position und Lage des Fahrzeuges mit einer höheren Rate als das Satellitennavigationssystem liefert.

3. Verfahren nach Anspruch 1 oder 2, **dadurch gekennzeichnet, dass** die Messdaten des Satellitennavigationssystems (GNSS) und des Inertialmesssystems (INS) über ein Kalman-Filter gekoppelt werden, wobei das Inertialmesssystem in denjenigen Zeiträumen, in denen das Satellitennavigationssystem keine oder keine auswertbaren Daten liefert, die Ermittlung der Position und Lage des Fahrzeuges fortsetzt.

4. Verfahren nach Anspruch 3, **dadurch gekennzeichnet, dass** am Ausgang des Kalman-Filters Daten mit einer Wiederholrate von größer 10 Hz zur Verfügung stehen.

5. Verfahren nach einem der Ansprüche 1 bis 3, **dadurch gekennzeichnet, dass** das Inertialmesssystem (INS) fest mit dem Fahrzeug verbunden ist und sämtliche drei senkrecht aufeinander stehenden translatorischen Beschleunigungen sowie sämtliche drei senkrecht aufeinander stehenden rotatorischen Beschleunigungen misst.

6. Verfahren nach einem der Ansprüche 1 bis 5, **dadurch gekennzeichnet, dass** die Fahrdynamik des Fahrzeuges zusätzlich auch durch Lenkeingriff geregelt wird.

7. Verfahren nach einem der Ansprüche 1 bis 6, **dadurch gekennzeichnet, dass** Positions-, Bewegungs- und/oder Lagedaten und/oder Daten über die Veränderung der Position, Bewegung und/oder Lage von benachbarten anderen Fahrzeugen und/oder dass Daten über den Zustand des Untergrundes insbesondere hinsichtlich seiner Haftreibungseigenschaften für die Fahrdynamikregelung verwendet werden und/oder dass die Positions-, Bewegungs- und/oder Lagedaten oder Daten über die Veränderung der Position, Bewegung und/oder Lage des Fahrzeuges an benachbarte andere Fahrzeuge gemeldet werden.

8. Verfahren nach einem der Ansprüche 1 bis 7, **dadurch gekennzeichnet, dass** die Positions-, Bewegungs- und/oder Lagedaten oder Daten über die Veränderung der Position, Bewegung und/oder Lage des Fahrzeuges an Fahrerassistenzsysteme zur z.B. Abstandsmessung, Kollisionsvermeidung und/oder zum aktiven Schutz der Insassen vor Verletzungen bei einem Unfall wie z.B. Airbag und/oder Gurtstraffer, ausfahrbare Überrollbügel weitergegeben werden.

9. Verfahren nach einem der Ansprüche 1 bis 8, **dadurch gekennzeichnet, dass** die Positions-, Bewegungs- und/oder Lagedaten oder Daten über die Veränderung der Position, Bewegung und/oder Lage des Fahrzeuges auch zur Navigation des Fahrzeuges verwendet werden.

10. Verfahren nach einem der Ansprüche 1 bis 9, **dadurch gekennzeichnet, dass** die Fahrdynamik des Fahrzeugs auch durch elektronisch verstellbare Drehmomentverteilung (Sperren, Bremsen und Getriebe) im Antriebsstrang geregelt wird.

11. Verfahren nach einem der Ansprüche 1 bis 10, **dadurch gekennzeichnet, dass** der Nickwinkel und der Wankwinkel des Fahrzeugs über Fahrwerkssteller elektronisch einstellbar sind und die Einstellung dieser Winkel in die Fahrdynamikregelung einbezogen wird.

12. Verfahren nach einem der Ansprüche 1 bis 11, **dadurch gekennzeichnet, dass** die Fahrdynamik des Fahrzeugs über elektronisch verstellbare Spoiler oder Klappen geregelt wird.

13. Verfahren nach einem der Ansprüche 1 bis 12, **dadurch gekennzeichnet, dass** das Fahrzeug ein Einspurfahrzeug oder Motorrad ist und zur Fahrdynamikregelung in Schräglage eine elektronisch um einige Grad verstellbare Hinterradlenkung vorgesehen ist.

**Claims**

1. A method for controlling the driving dynamics of a single-track or dual-track land vehicle, wherein

- the driving dynamics of the vehicle are controlled by way of brake and/or engine intervention, notably depending on the movement of the vehicle in the three-dimensional space and relative to an earth coordinate system having the earth's gravitational center as its origin,
- the attitude and the position of the vehicle in three-dimensional space and relative to the earth coordinate system are determined by means of a satellite navigation system (GNSS) which comprises a receiver, mounted on or in the vehicle and having at least three antennas for reception of satellite navigation signals, and by means of an inertial measuring system (INS), mounted on or in the vehicle, for measuring all changes in the movement, position and attitude of the vehicle,

**characterized in**

- **that** the control of the driving dynamics performed by way of brake and/or engine intervention is additionally performed depending on the effective direction of gravity or the earth's gravitational pull,
- wherein, from the values of the position and attitude of the vehicle and from the coordinates of the center of gravity of the earth, there is computed, in real time, the direction of the gravity acting on the vehicle, or the direction of the vector from the center of gravity of the vehicle toward the center of gravity of the earth in ground-based and/or vehicle-based coordinates.

2. The method according to claim 1, **characterized in that** the inertial measuring system (INS) is being continuously calibrated with the current data of the position and attitude by means of the satellite navigation system and provides measurement data about changes of the movement and about the position and attitude of the vehicle at a higher rate than the satellite navigation system.

3. The method according to claim 1 or 2, **characterized in that** the measurement data of the satellite navigation system (GNSS) and the inertial measuring system (INS) are coupled by a Kalman filter, wherein, in those periods of time in which the satellite navigation system delivers no data or no evaluable data, the inertial measuring system continues the detecting of the position and attitude of the vehicle.

4. The method according to claim 3, **characterized in that** data with a repetition rate higher than 10 Hz are available at the output of the Kalman filter.

5. The method according to any one of claims 1 to 3, **characterized in that** the inertial measurement system (INS) is fixedly connected to the vehicle and is operative to measure all three translatory accelerations orthogonally arranged above each other as well as all three rotary accelerations orthogonally arranged above each other.

6. The method according to any one of claims 1 to 5, **characterized in that** the driving dynamics of the vehicle are additionally controlled also by steering intervention.

7. The method according to any one of claims 1 to 6, **characterized in that** position, movement and/or attitude data, and/or data about the change of the position, movement and/or attitude of adjacent other vehicles, and/or data about the condition of the underlying ground particularly with regard to its static friction, are used for the driving dynamics control, and/or that the position, movement and/or attitude data, or data about the change of the position, movement and/or attitude of the vehicle are communicated to adjacent other vehicles.

8. The method according to any one of claims 1 to 7, **characterized in that** the position, movement and/or attitude data or data about the change of the position, movement and/or attitude of the vehicle are communicated to driver assistance systems e.g. for distance measurement, collision avoidance and/or for active protection of the occupants from injury in case of an accident, e.g. an air bag and/or belt tensioner, or extendable roll-over bars.

9. The method according to any one of claims 1 to 8, **characterized in that** the position, movement and/or attitude data or data about the change of the position, movement and/or attitude of the vehicle are also used for navigation of the vehicle.

10. The method according to any one of claims 1 to 9, **characterized in that** the driving dynamics of the vehicle are also controlled by electronically adjustable torque distribution (locks, brakes and transmissions) in the power train.

11. The method according to any one of claims 1 to 10, **characterized in that** the pitch angle and the roll angle of the vehicle are electronically adjustable by means of chassis adjustment devices and that the setting of these angles is included in the driving dynamics control.

12. The method according to any one of claims 1 to 11, **characterized in that** the driving dynamics of the vehicle are controlled via electronically adjustable spoilers or flaps.

13. The method according to any one of claims 1 to 12, **characterized in that** the vehicle is a single-track vehicle or motorcycle and that a rear-wheel steering system, electronically adjustable by several degrees, is provided for driving dynamics control in case of an inclined position.

**Revendications**

1. Procédé de régulation de la dynamique d'un véhicule de transport terrestre monotrace ou bitrace, dans lequel

- la dynamique du mouvement du véhicule est régulée par l'intermédiaire d'une intervention sur les freins et/ou sur le moteur, et plus précisément en fonction du mouvement du véhicule dans l'espace tridimensionnel, et sur la base d'un système de coordonnées terrestres ayant le géocentre comme origine,
- dans lequel la localisation et la position du véhicule sont déterminées dans l'espace tridimensionnel et sur la base du système de coordonnées terrestre à l'aide d'un système de navigation par satellite (GNSS), qui comprend un récepteur, disposé contre ou dans le véhicule, avec au moins trois antennes pour recevoir des signaux de navigation par satellite, et un système de navigation par inertie (INS) disposé contre ou dans le véhicule, et destiné à mesurer l'ensemble des changements de mouvement, de position ou de localisation du véhicule,

**caractérisé en ce que**

- la régulation de la dynamique du mouvement, réalisée par l'intermédiaire d'une action sur les freins et/ou sur le moteur, est mise en oeuvre en outre en fonction de la direction d'action de la force de gravité ou de la force d'attraction terrestre,
- à partir des valeurs de la position et de la localisation du véhicule et des coordonnées du géocentre, on calcule en temps réel la direction de la force de gravité agissant sur le véhicule ou la direction du vecteur allant du centre de gravité du véhicule au géocentre, dans des coordonnées terrestres et/ou fixes par rapport au véhicule.

**2.** Procédé selon la revendication 1, **caractérisé en ce que** le système de navigation par inertie (INS) est étalonné à l'aide du système de navigation par satellite, en permanence avec les données réelles de la position et de la localisation, et fournit des données de mesure portant sur les changements de mouvement, ainsi que sur la position et la localisation du véhicule, à une vitesse plus grande que le système de navigation par satellite.

**3.** Procédé selon la revendication 1 ou 2, **caractérisé en ce que** les données de mesure du système de navigation par satellite (GNSS) et du système de navigation par inertie (INS) sont couplées par l'intermédiaire d'un filtre de Kalman, le système de mesure par inertie poursuivant la détermination de la position et de la localisation du véhicule au cours des intervalles de temps pendant lesquels le système de navigation par satellite ne fournit aucune donnée ou aucune donnée exploitable.

**4.** Procédé selon la revendication 3, **caractérisé en ce que**, en sortie du filtre de Kalman, on dispose de données ayant une vitesse de répétition supérieure à 10 Hz.

**5.** Procédé selon l'une des revendications 1 à 3, **caractérisé en ce que** le système de navigation par inertie (INS) est relié de façon fixe au véhicule, et mesure la totalité des trois accélérations en translation, perpendiculaires les unes aux autres, ainsi que la totalité des trois accélérations en rotation, perpendiculaires les unes aux autres.

**6.** Procédé selon l'une des revendications 1 à 5, **caractérisé en ce que** la dynamique du mouvement du véhicule est en outre aussi régulée par une intervention sur la direction.

**7.** Procédé selon l'une des revendications 1 à 6, **caractérisé en ce que** les données de position, de mouvement et/ou de localisation, et/ou les données concernant le changement de position, de mouvement et/ou de localisation d'autres véhicules voisins, et/ou les données concernant l'état du sol, en particulier pour ce qui concerne ses propriétés de frottement statique, sont utilisées pour la régulation de la dynamique du mouvement, et/ou **en ce que** les données de position, de mouvement et/ou de localisation, ou les données portant sur le changement de la position, du mouvement et/ou de la localisation du véhicule, sont notifiées à d'autres véhicules voisins.

**8.** Procédé selon l'une des revendications 1 à 7, **caractérisé en ce que** les données de position, de mouvement et/ou de localisation, ou les données portant sur le changement de la position, du mouvement et/ou de la localisation du véhicule, sont transmises à des systèmes d'assistance à la conduite, par exemple pour la mesure des distances, l'évitement de collisions et/ou pour une protection active des passagers vis-à-vis de blessures en cas d'accident, comme par exemple un coussin gonflable et/ou un tendeur de ceinture, des arceaux de sécurité escamotables.

**9.** Procédé selon l'une des revendications 1 à 8, **caractérisé en ce que** les données de position, de mouvement et/ou de localisation, ou les données portant sur le changement de la position, du mouvement et/ou de la localisation du véhicule, sont aussi utilisées pour la navigation du véhicule.

**10.** Procédé selon l'une des revendications 1 à 9, **caractérisé en ce que** la dynamique du mouvement du véhicule est aussi régulée par une répartition du couple (arrêts de sûreté, freins et transmission), pouvant être ajustée par voie électronique, dans le groupe motopropulseur.

**11.** Procédé selon l'une des revendications 1 à 10, **caractérisé en ce que** l'angle de tangage et l'angle de roulis du véhicule peuvent être ajustés par voie électronique par l'intermédiaire d'un élément régulateur de châssis, l'ajustement de ces angles étant incorporé dans la régulation de la dynamique du mouvement.

**12.** Procédé selon l'une des revendications 1 à 11, **caractérisé en ce que** la dynamique du mouvement du véhicule est régulée par des déflecteurs ou des volets réglables électroniquement.

**13.** Procédé selon l'une des revendications 1 à 12, **caractérisé en ce que** le véhicule est un véhicule monotrace, ou une motocyclette, et **en ce que**, pour la régulation de la dynamique du mouvement en position inclinée, il est prévu une direction par la roue arrière, pouvant être ajustée par voie électronique sur quelques degrés.

**Fig.1**

**Fig.2**

**Fig.3**

**Fig.4**

**Fig.5**

3x Beschleung.rotatorisch
3x Beschleung.translatorisch

3 Antennen

GNSS
Empfänger

Inertial-
System

Kalman
Filter

Position in Echtzeit,Lage,
Geschwindigkeits-Vektor,
Beschleunigungen

Fahrdynamikregelung

Abstandswarnung u. Kollisionsvermeidung (inkl.Airbag Steuergerät)

Navigationssystem

**Fig.6**

**Fig.7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004022289 A
- DE 102005028995 A
- DE 102009000922 A
- DE 10232362 A
- DE 10220575 A
- US 20080147280 A
- DE 10148667 C
- WO 2005119290 A
- DE A102005028995 A1
- DE 3222149 A

**In der Beschreibung aufgeführte Nicht-Patentliteratur**

- **AUS SANTIAGO ALBAN.** DESIGN AND PERFORMANCE OF A ROBUST GPS/INS ATTITUDE SYSTEM FOR AUTOMOBILE APPLICATIONS. *Dissertation Universität Stanford,* 2004